Europäisches Patentamt

European Patent Office

Office européen des brevets

(19)

(11) Numéro de publication : **0 036 370**
**B1**

(12) **FASCICULE DE BREVET EUROPÉEN**

(45) Date de publication du fascicule du brevet :
22.06.83

(51) Int. Cl.³ : **G 01 N 21/53**

(21) Numéro de dépôt : **81400402.4**

(22) Date de dépôt : **17.03.81**

(54) Procédé et appareil d'évaluation de la visibilité.

(30) Priorité : **18.03.80 FR 8005978**

(43) Date de publication de la demande :
**23.09.81 Bulletin 81/38**

(45) Mention de la délivrance du brevet :
**22.06.83 Bulletin 83/25**

(84) Etats contractants désignés :
**BE DE GB IT NL**

(56) Documents cités :
**DE B 1 174 086**
**US A 3 541 336**
**APPLIED OPTICS, vol. 14, no. 9, Septembre 1975 New York, US J. WINSTANLEY et al. : « Point visibility meter : a forward scatter instrument for the measurement of aerosol extinction coefficient » pages 2151-2157**
**RADIO AND ELECTRONIC ENGINEER, voi. 49, no. 11, Novembre 1979 London, GB M. JUDGE : « Visual range monitors » pages 545-556**
**JOURNAL OF PHYSICS E, vol. 3, 1970 Oxford, GB J. GARLAND et al. : « An integrating nephelometer for atmospheric studies and visibility warning devices », pages 275-280**

(73) Titulaire : **ENERTEC SOCIETE ANONYME**
**12, Place des Etats-Unis**
**F-92120 Montrouge (FR)**

(72) Inventeur : **Jappe, Pierre**
**18, rue César Franck**
**F-91120 Palaiseau (FR)**
Inventeur : **Tourret, Jean**
**18, rue Marcellin Berthelot**
**F-92120 Montrouge (FR)**

(74) Mandataire : **Bentz, Jean-Paul**
**GIERS SCHLUMBERGER Service BREVETS 12, place des Etats-Unis**
**F-92124 Montrouge Cedex (FR)**

EP 0 036 370 B1

Jouve, 18, rue St-Denis, 75001 Paris, France

### Procédé et appareil d'évaluation de la visibilité

La présente invention est relative à un appareil pour évaluer la visibilité, et en particulier à un appareil pour déterminer l'effet de particules dans un fluide sur la visibilité à travers celui-ci.

Les procédés et appareils connus pour évaluer la visibilité dans un fluide nécessitent généralement l'utilisation d'un faisceau de lumière qui traverse le fluide, fréquemment l'atmosphère, entre une source lumineuse et des moyens pour détecter l'intensité de la lumière. Dans le genre d'appareil connu sous le nom de transmissiomètre, les moyens de détection sont disposés à une certaine distance de la source lumineuse, par exemple plusieurs dizaines de mètres, pour recevoir la lumière directement de celle-ci, et la visibilité est calculée, suivant une loi connue, à partir du coefficient de transmission du fluide tel qu'indiqué par le rapport de l'intensité lumineuse détectée à l'intensité lumineuse émise. Ce type d'équipement exige une base opératoire sans obstacles considérable et la distance de visibilité mesurable est quelque peu restreinte pour une base de longueur donnée. En outre, l'équipement est sujet à des variations de l'intensité inhérente de la source lumineuse, qui en pratique peuvent être importantes, en raison par exemple d'un obscurcissement interne de la source lumineuse.

Dans un autre genre d'appareil, connu sous le nom de diffusiomètre, les moyens de détection reçoivent la lumière non pas directement de la source lumineuse, mais après diffusion sur des particules (telles que de la fumée ou de la vapeur d'eau dans le cas de l'atmosphère) qui sont en suspension dans le fluide et réduisent la visibilité au travers. A cet effet, les moyens de détection sont agencés pour recevoir la lumière dans une direction faisant un angle prédéterminé avec la direction de la lumière incidente sur les particules. Dans le cas d'altimètres de nuages, cet angle est habituellement de 180°. Dans d'autres types de diffusiomètres, il peut aller de quelques dizaines de degrés à 180°. Comme pour les transmissiomètres, ce type d'appareil est sujet à des variations de l'intensité de la source lumineuse.

On connaît par l'article de J. Winstanley et al : « Point visibility meter : a forward scatter instrument for the measurement of aerosol extinction coefficient », paru dans Applied Optics, Vol. 14, N° 9, septembre 1975, pages 2151-2157, et par le brevet US 3 745 350, un appareil pour évaluer l'effet de particules dans un fluide sur la visibilité à travers celui-ci, comprenant une source de lumière et des moyens de détection prévus pour détecter la lumière propagée par diffusion vers l'avant desdites particules et la lumière propagée principalement par transmission directe à travers un volume dudit fluide contenant lesdites particules, le rapport entre l'intensité du flux diffusé et l'intensité du flux direct étant représentatif de la visibilité.

Cet appareil connu comprend en tant que moyens de détection deux détecteurs distants de la source, un pour le flux direct et un pour le flux diffusé. Une telle solution n'est pas satisfaisante pour des raisons d'encombrement et également à cause des variations relatives dans le temps de la sensibilité des détecteurs.

L'appareil selon l'invention tel que revendiqué dans la revendication 1 est caractérisé par le fait que les moyens de détection comprennent un détecteur adjacent à la source et ayant son axe optique parallèle à celui de la source, et que une paire de miroirs disposés respectivement à 45° sur lesdits axes optiques dirigent le flux direct vers le détecteur, l'un des miroirs étant angulairement mobile pour diriger le flux diffusé sur ledit détecteur.

Ainsi, l'évaluation de la visibilité peut être obtenue dans un espace très réduit et est indépendante des variations de la sensibilité des moyens de détection.

L'invention sera mieux comprise en se référant à la description suivante et au dessin annexé qui représente, à titre d'exemple non limitatif, un appareil mettant en œuvre le procédé suivant l'invention. Sur ce dessin :

la figure 1   est un schéma synoptique d'un appareil conforme à l'invention,

la figure 2   est un diagramme montrant le trajet des rayons optiques dans l'appareil,

les figures 3 et 4   représentent un mode de réalisation pratique de l'appareil, sur des vues en plan et en élévation respectives.

L'appareil qui va être décrit est destiné à mesurer la visibilité de l'atmosphère au voisinage de l'appareil, par exemple sur une autoroute en un point particulièrement sujet au brouillard, par échantillonnage des propriétés de l'atmosphère à transmettre et à diffuser la lumière à l'emplacement de l'appareil.

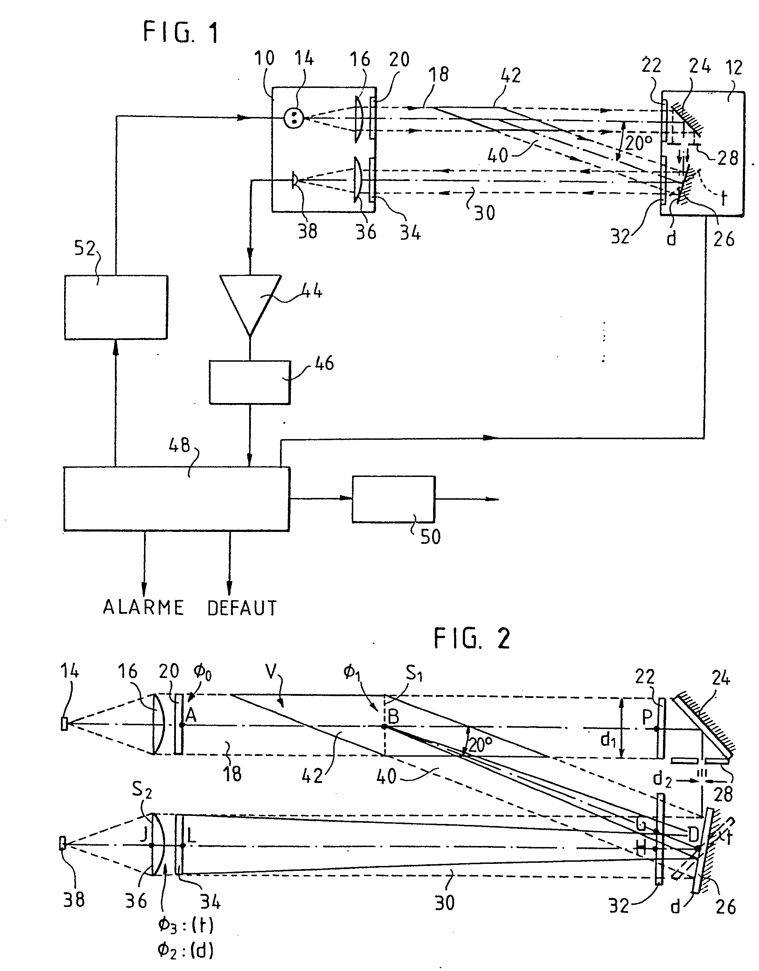

En se référant à la fig. 1, l'appareil comporte deux boîtiers 10 et 12 distant d'un mètre l'un de l'autre sur un chassis (non représenté). Le boîtier 10 contient une lampe à éclairs au xénon 14 pour produire de fortes impulsions qui sont collimatées en un faisceau 18 par une lentille 16. Le faisceau 18 quitte le boîtier 10 à travers une première fenêtre 20 et se propage par transmission directe à travers l'atmosphère vers une fenêtre correspondante 22 dans l'autre boîtier 12. Ce boîtier 12 contient deux miroirs 24 et 26 ; le premier miroir 24 est monté avec un angle de 45° par rapport à l'axe du faisceau lumineux 18, de sorte qu'il réfléchit la lumière incidente vers le second miroir 26 à travers un écran 28 muni d'une ouverture situé entre les miroirs 24 et 26.

Le miroir 26, à la différence du miroir 24, est mobile angulairement autour d'un axe transversal au plan de la fig. 1, entre deux positions. Dans une première position, indiquée par une ligne en pointillé en t, le miroir 26 fait un angle de 45° par rapport à la lumière réfléchie vers celui-ci par le miroir 24 et il est ainsi apte à réfléchir en retour cette lumière vers le boîtier 10 sous forme d'un faisceau lumineux 30 parallèle à et séparé du faisceau 18. Le faisceau 30 quitte le boîtier 12 à travers une seconde fenêtre 18. Le faisceau 30 quitte le boîtier 12 à travers une seconde fenêtre 32 et entre dans le boîtier 10 à travers une fenêtre correspondante 34 où il est focalisé par une lentille 36 sur un photo-détecteur 38, qui est par exemple une photodiode.

Dans sa seconde position indiquée par une ligne en trait plein en d, le miroir 26 est décalé angulairement dans le sens antihoraire par rapport à sa première position t d'un angle de 35°. Dans cette seconde position d, il est apte à réfléchir vers le boîtier 10 la lumière incidente venant de la fenêtre 32 sous un angle de 20° par rapport à la direction du faisceau 30. Comme indiqué à la fig. 1, la lumière 40 incidente sur le miroir 26 sous cet angle provient du faisceau 18 par diffusion (combinaison de réflexion et de réfraction) sous un angle de 20° par rapport au faisceau 18 sur les particules de vapeur d'eau, par exemple, dans un secteur 42 du faisceau 18.

Ainsi, quand le miroir 26 est en position t, le photorécepteur 38 reçoit la lumière qui s'est propagée principalement par transmission à travers l'atmosphère entre les boîtiers 10 et 12, tandis que, quand le miroir 26 est dans sa position d, le photorécepteur 38 reçoit la lumière qui s'est propagée au moins en partie par diffusion sur des particules en suspension dans cette atmosphère.

Les signaux de sortie du photorécepteur 38 ayant une amplitude représentative de l'intensité de la lumière incidente, sont appliqués par l'intermédiaire d'un amplificateur 44 sur un convertisseur analogique-numérique 46. Les signaux de sortie du convertisseur 46, représentatifs sous forme numérique de l'intensité de la lumière incidente sur le photorécepteur 38, sont appliqués sur un circuit de commande 48 qui calcule à partir de ceux-ci la visibilité atmosphérique (comme il sera expliqué par la suite) et commande un convertisseur numérique-analogique 50 pour fournir un courant de sortie en relation avec la visibilité. Le circuit de commande 48 commande aussi un circuit d'excitation 52 de la lampe à éclairs 14 pour produire les impulsions lumineuses suivant un programme prédéterminé, et de plus, commande la position du miroir 26, par exemple au moyen d'un électroaimant rotatif (non représenté). En outre, le circuit de commande 48 compare la visibilité calculée avec un seuil prédéterminé, et déclenche une alarme (par exemple pour exciter un dispositif avertisseur à proximité de l'autoroute) si la visibilité tombe au-dessous de ce seuil, et déclenche un indicateur de défaut si l'intensité de la lumière incidente sur le photorécepteur 38 tombe à une valeur indiquant un obscurcissement excessif de la lampe à éclairs 14 et/ou des fenêtres 20, 22, 32 et 34.

Le circuit de commande 48 peut être avantageusement réalisé en utilisant un microprocesseur dont le programme pour exécuter les différentes fonctions de commande et de calcul décrites ci-dessus sont à la portée de l'homme de métier et ne nécessite pas de description plus détaillée. De même, les circuits détaillés de l'amplificateur 44, des convertisseurs 46 et 50, et du circuit d'excitation 52 sont usuels et ne nécessitent pas de description.

Cependant, avant l'élaboration de la mesure de la visibilité atmosphérique à partir des intensités de la lumière transmise et diffusée comme il a été exposé, il peut être utile de discuter brièvement la séquence complète des opérations de l'appareil pour une telle mesure.

Initialement, le miroir 26 est dans sa position t et la lampe à éclairs 14 est excitée quatorze fois, une fois toutes les deux secondes. En synchronisme, mais toutes les secondes, le circuit de commande 48 mémorise la valeur du courant du signal de sortie du convertisseur analogique-numérique 46.

Ainsi, de telles valeurs successives représentent alternativement $M_T$ l'intensité de la lumière transmise tombant sur le photorécepteur 38, et $M_Z$ la sortie parasitée du convertisseur 46 due au bruit, à la dérive de l'amplificateur et à la lumière ambiante tombant sur le photorécepteur 38. Ensuite, le miroir 26 est décalé dans sa position d, et quatorze autres paires de valeurs représentant $M_D$ l'intensité de la lumière diffusée tombant sur le photorécepteur 38 et $M_Z$ la valeur zéro sont obtenues de façon analogue. Le circuit de commande 48 forme les différences $M_T-M_Z$ et $M_D-M_Z$ pour chaque paire successive de valeurs pour compenser la sortie parasitée, fait la somme des quatorze premières valeurs résultantes avec chaque autre pour former $\Sigma(M_T-M_Z)$, fait la somme des quatorze valeurs restantes pour former $\Sigma(M_D-M_Z)$ et calcule alors le rapport :

$$Y = 10 \cdot \Sigma(M_T-M_Z)/\Sigma(M_D-M_Z)$$

Comme expliqué par la suite, Y est la visibilité en mètres, par exemple dans la gamme de 10 à 10 000 mètres.

La prise de plusieurs échantillons pour chaque mesure réduit de cette manière la possibilité que des variations de visibilité à petite échelle au voisinage de l'appareil conduise à une valeur anormalement élevée ou faible pour la visibilité globale. Il est à noter que la série de mesures d'intensité décrite ci-dessus prend un total de 56 secondes, temps durant lequel quelques faibles mouvements des particules affectant la visibilité (par exemple des gouttelettes de vapeur d'eau dans le brouillard) se produisent habituellement. Comme le calcul de la valeur de la visibilité peut être exécuté en moins de quatre secondes, il est possible de répéter la mesure chaque minute. Si la visibilité dépasse 5 000 m. Cependant, cette cadence de mesure est considérée comme inutile, et le circuit de commande 48 peut être prévu pour répéter la mesure seulement toutes les 3 minutes.

La théorie appliquée dans le calcul de la mesure de visibilité va être maintenant discutée en relation avec la fig. 2.

En se référant à cette figure, l'intensité $\phi_2$ de la lumière diffusée tombant sur le photorécepteur 38 (c'est-à-dire avec le miroir 26 dans sa position d) est :

$$\phi_2 = Iwe^{-cb}(= \Sigma(M_D - M_Z)) \tag{1}$$

où

I est l'intensité de la lumière totale diffusée dans la direction BD depuis le point B,

w est l'angle solide correspondant à la lentille 36 vue depuis le point B,

c est le coefficient d'absorption atmosphérique,

b est le trajet dans l'atmosphère BG + HL (c'est-à-dire jusqu'à la fenêtre 32 et entre les fenêtres 32 et 34).

La valeur de I est aussi donnée par :

$$I = NV\,0,74\,E\pi r^2 \tag{2}$$

où

N est le nombre de particules (gouttelettes d'eau) par unité de volume,

V est le volume du secteur 42 d'intersection entre le faisceau émis 18 et le faisceau diffusé 40,

0,74 est le facteur d'atténuation associé à la diffusion de la lumière par une gouttelette d'eau sous un angle de 20° par rapport à la direction de la lumière incidente,

E est l'éclairement d'une gouttelette d'eau

$\pi r^2$ est l'aire de la section transversale d'une gouttelette d'eau de rayon r.

On peut remarquer qu'un angle de diffusion de 20° a été choisi parce qu'il correspond à une zone d'intensité minimale dans le diagramme d'interférence produit par la lumière incidente sur une gouttelette d'eau. Ceci est souhaitable, car l'intensité des zones d'intensité maximale dans le diagramme de diffraction est fortement sensible à la fois aux dimensions des gouttes et à la longueur d'onde de la lumière. Ainsi, en choisissant un angle qui élimine effectivement toute contribution due au diagramme de diffraction, on minimise les erreurs provenant de la sensibilité à ces facteurs. Un angle de 20° satisfait à ces conditions sans nécessiter une précision excessive dans le réglage de cet angle et sans provoquer une diminution excessive de l'intensité de la lumière diffusée.

La grandeur E est donnée par la relation :

$$E = \phi_0 e^{-ca}/S_1 \tag{3}$$

(qui suit la loi de Koschmieder)

où

$\phi_0$ est l'intensité de la lumière émise à la fenêtre 20

a est le trajet dans l'atmosphère AB

$S_1$ est l'aire de la section transversale du faisceau 18 au point B.

Finalement, w est donné par :

$$w = S_2/K^2 \tag{4}$$

où

$S_2$ est l'aire de la surface effective de la lentille 36

K est la longueur du trajet optique BD + DJ

En substituant les équations (2), (3) et (4) dans l'équation (1), on obtient :

$$\phi_2 = NV \cdot 0,74\,(\phi_0 e^{-ca}/S_1)\,\pi r^2\,(S_2/K^2)\,e^{-cb} \tag{5}$$

L'intensité de la lumière transmise $\phi_3$ tombant sur le photorécepteur 38 (avec le miroir 26 dans sa position t) est :

$$\phi_3 = x\phi_0 e^{-cu}(= \Sigma(M_T - M_Z)) \tag{6}$$

où

x est le coefficient d'atténuation de l'écran ajouré 28,

u est le trajet atmosphérique AP + HL (c'est-à-dire entre les fenêtres 20 et 22, et 32 et 34).

On peut montrer que, pour le coefficient de contraste standard des mesures de visibilité atmosphérique de 5 %,

$$c = 3/V \tag{7}$$

où

V est la visibilité en mètres,

et que

$$c : 2N\pi r^2 \tag{8}$$

(Des références pour ces formules et pour la relation entre l'angle de diffusion et l'intensité peuvent être trouvées dans l'ouvrage de J. Bricard « Physique des Nuages » publié aux Presses Universitaires de France, et dans « Transmission du rayonnement infrarouge dans l'atmosphère » par A. Arnulf et J. Bricard, dans Acta Electronica.)

En formant le rapport des équations (5) et (6) et en utilisant la formule (7) pour éliminer c et les formules (7) et (8) pour éliminer $N\pi r^2$ on arrive à :

$$Y = 10\phi_3/\phi_2 = 10 \times (K^2 S_1/1,11 \ VS_2)Ve^{-3(u-a-b)/V} \tag{9}$$

Pour un appareil avec une longueur de trajet atmosphérique AP d'environ 600 mm et une différence entre les trajets AP et HL d'environ 135 mm, le terme exponentiel varie entre 1,006 et 1,0006 pour des visibilités de 10 et 100 mètres respectivement. Ainsi, ce terme peut être négligé sans introduire d'erreur significative. Par suite,

$$Y = 10 \cdot \sum(M_T - M_Z)/\Sigma(M_D - M_Z) = 10 \times (K^2 S_1/1,11 \ VS_2) \ V \tag{10}$$

Comme x et la quantité entre parenthèses dans le terme de droite sont constants, on peut voir que Y (rapport dans ce cas multiplié par 10 des intensités transmises et diffusées) est directement proportionnel à la visibilité V ; on peut aussi voir que Y est indépendant de l'intensité d'émission de la lampe à éclairs 14, de la sensibilité du photorécepteur 38 et de la transparence (ou autres) des fenêtres 20, 22, 32 et 34.

Ainsi toute variation dans le temps de ces paramètres n'affecte pas la précision de l'appareil. Il est à noter à cet égard que les deux faisceaux transmis et diffusé traversent une fenêtre quatre fois : dans le cas du faisceau transmis, les fenêtres 20, 22, 32 et 34, et dans le cas du faisceau diffusé, les fenêtres 20, 32 (deux fois) et 34.

La constante de proportionnalité reliant Y et V peut être choisie par sélection de la dimension de l'ouverture de l'écran 28, et ainsi du coefficient d'atténuation x. Par exemple pour avoir Y = V en mètres, x est égal à :

$$1,11 \ VS_2/10 \ K^2 \ S_1 \tag{11}$$

x est égal au rapport de la surface de l'ouverture à la surface de la section transversale du faisceau 18, c'est-à-dire à :

$$(d_2/d_1)^2 \tag{12}$$

où
   $d_1$ est le diamètre du faisceau 18
   $d_2$ est le diamètre de l'ouverture.
Ainsi :

$$d_2 = d_1(1,11 \ VS_2/10 \ K^2 \ S_1)^{1/2} \tag{13}$$

Un étalonnage initial de l'appareil est réalisé en plaçant un fil fin, par exemple d'or ou d'acier, à l'emplacement B dans le faisceau 18. La lumière réfléchie par ce fil vers le miroir 26 simule l'effet des gouttelettes d'eau dans le faisceau 18. Ainsi une série de lectures d'étalonnage peut être établie pour des fils de différents matériaux et diamètres.

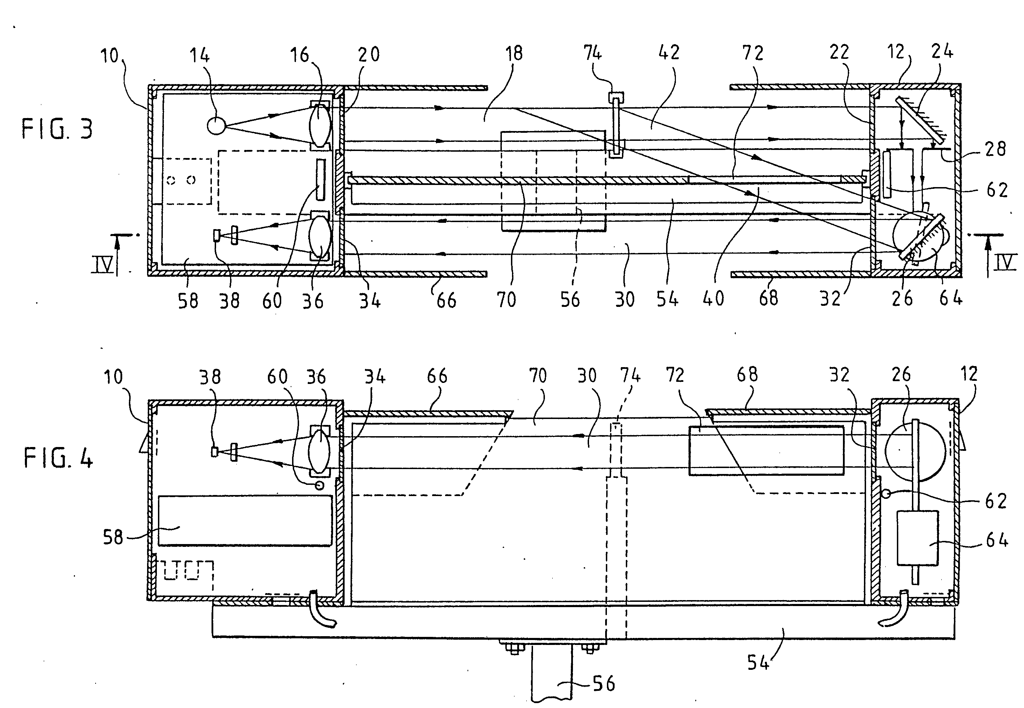

Un mode de réalisation pratique de l'appareil est représenté aux fig. 3 et 4. La plupart des éléments représentés correspondent directement à ceux de la fig. 1 et portent des numéros de référence correspondants.

En outre, on peut voir que les boîtiers 10 et 12 sont supportés par une embase 54 montée sur un poteau 56. Les circuits 44 à 52 sont situés sur une plaquette de circuit imprimé 58 dans le boîtier 10 qui contient aussi une chaufferette 60 pour empêcher la condensation sur les lentilles 16 et 36 et les fenêtres 20 et 34. Le boîtier 12 contient une chaufferette analogue 62 et un électroaimant rotatif 64 pour faire tourner le miroir 26. L'entrée de la lumière ambiante est limitée par des capots 66 et 68 partant des boîtiers 10 et 12 respectivement et un écran vertical 70 s'étend sur la longueur de l'appareil, entre les boîtiers 10 et 12, pour séparer les trajets lumineux 18 et 30. Une ouverture 72 est prévue dans cet écran 70 pour permettre au faisceau 40 d'atteindre la fenêtre 32 et le miroir 26. Une colonnette 74 à la position B (voir fig. 2) permet d'intercaler des filtres d'étalonnage dans le faisceau 18.

De nombreuses modifications peuvent être apportées à l'appareil qui vient d'être décrit à titre d'exemple.

Ainsi le miroir 24 peut être mobile à la place du miroir 26, le secteur 42 étant alors dans le faisceau 30.

**Revendications**

1. Appareil pour évaluer l'effet de particules dans un fluide sur la visibilité à travers celui-ci, comprenant une source de lumière et des moyens de détection prévus pour détecter la lumière propagée par diffusion vers l'avant desdites particules et la lumière propagée principalement par transmission directe à travers un volume dudit fluide contenant lesdites particules, le rapport entre l'intensité du flux diffusé et l'intensité du flux direct étant représentatif de la visibilité, caractérisé par le fait que les moyens de détection comprennent un détecteur (38) adjacent à la source (14) et ayant son axe optique parallèle à celui de la source, et que une paire de miroirs (24, 26) disposés respectivement à 45° sur lesdits axes optiques dirigent le flux direct vers le détecteur, l'un des miroirs (26) étant angulairement mobile pour diriger le flux diffusé sur ledit détecteur.

2. Appareil selon la revendication 1 caractérisé par le fait que le miroir mobile (26) est placé sur l'axe optique du détecteur (38).

3. Appareil selon l'une des revendications 1 et 2, caractérisé par le fait que ledit miroir (26) est mobile sur un angle de 35° de manière à diriger vers le détecteur (38) la lumière diffusée sous un angle de 20° par rapport à l'axe optique de la source (14).

4. Appareil selon l'une des revendications 1 à 3, caractérisé par le fait que la lumière directement transmise se propage à travers une ouverture (28) dimensionnée pour limiter l'intensité maximale de cette lumière par rapport à l'intensité de ladite lumière diffusée à la visibilité minimale.

**Claims**

1. A device for assessing the effect of particles in a fluid on visibility therein, comprising a light source and means for detecting the light propagated by forward-scattering from said particles and the light propagated primarily by transmission directly through a volume of said fluid containing said particles, the ratio of the intensity of the scattered flux to the intensity of the direct flux being representative of visibility, characterized in that the detecting means comprise a detector (38) adjacent to the source (14) having its optical axis parallel to that of the source, and in that a pair of mirrors (24, 26) respectively disposed at an angle of 45° to said optical axes direct the direct flux to the detector, one of the mirrors (26) being angularly movable to direct the scattered flux to said detector.

2. A device according to claim 1, characterized in that said movable mirror (26) is placed on the optical axis of the detector (38).

3. A device according to claim 1 or claim 2, characterized in that said mirror (26) is movable through an angle of 35°, whereby to direct the light scattered at an angle of 20° to the optical axis of the source (14) to the detector (38).

4. A device according to any one of the preceding claims, characterized in that said directly-transmitted light propagates through an aperture (28) dimensioned to limit the maximum intensity of that light with respect to the intensity of said scattered light at minimum visibility.

**Ansprüche**

1. Gerät zur Beurteilung der Auswirkung von Teilchen in einem Fluid auf die Sichtbarkeit durch dieses hindurch, mit einer Lichtquelle und Detektionsmitteln, die vorgesehen sind, um das durch Vorwärtsstreuung vor diesen Teilchen sich ausbreitende Licht und das hauptsächlich durch direkte Transmission durch ein Volumen des die genannten Teilchen enthaltenden Fluids sich ausbreitende Licht zu erfassen, wobei das Verhältnis zwischen der Intensität des Streuflusses und der Intensität des direkten Flusses die Sichtbarkeit darstellt, dadurch gekennzeichnet, daß die Detektionsmittel einen an die Quelle (14) angrenzenden Detektor (38) umfassen, dessen optische Achse parallel zu derjenigen der Quelle ist, und daß zwei Spiegel (24, 26), die jeweils unter 45° auf den optischen Achsen angeordnet sind, den direkten Fluß zu dem Detektor richten, wobei einer der Spiegel (26) winkelverstellbar ist, um den Streufluß auf den Detektor zu richten.

2. Gerät nach Anspruch 1, dadurch gekennzeichnet, daß der verstellbare Spiegel (26) auf der optischen Achse des Detektors (38) angeordnet ist.

3. Gerät nach Anspruch 1 oder 2, dadurch gekennzeichnet, daß der Spiegel (26) um einen Winkel von 35° verstellbar ist, so daß das Streulicht zu dem Detektor (38) hin unter einem Winkel von 20° in bezug auf die optische Achse der Quelle (14) gerichtet wird.

4. Gerät nach einem der Ansprüche 1 bis 3, dadurch gekennzeichnet, daß das direkt übertragene Licht sich durch eine Öffnung (28) hindurch ausbreitet, die so bemessen ist, daß die maximale Intensität dieses Lichtes im Verhältnis zur Intensität des Streulichtes bei minimaler Sichtbarkeit begrenzt ist.

FIG. 1

ALARME   DEFAUT

FIG. 2

FIG. 3

10   14   16   20          18   74   42   72   22   12   24

28

62

IV          IV

58   38   60   36   34   66   70   56   30   54   40   68   32   26   64

FIG. 4

10   38   60   36   34   66   70   30   74   72   68   32   26   12

62

64

58

54

56

0 036 370